# EUROPEAN PATENT APPLICATION

(11) **EP 4 841 762 A1**
(43) Date of publication of application: **18.11.2026**
(21) Application number: 25835923.1
(22) Date of filing: 05.06.2025
(51) Int. Cl.: H01M 50/172

(54) **BATTERY CELL, BATTERY, AND ELECTRIC DEVICE**

(30) Priority: 11.07.2024 CN 202410931148
(71) Applicant: Contemporary Amperex Technology Co., Limited, Ningde, Fujian 352100 (CN)
(72) Inventor: BAI, Lulu, Ningde, Fujian 352100 (CN); XU, Hu, Ningde, Fujian 352100 (CN); HUANG, Siying, Ningde, Fujian 352100 (CN); CHEN, Long, Ningde, Fujian 352100 (CN); CHEN, Xiangrong, Ningde, Fujian 352100 (CN); GUO, Xiaoyong, Ningde, Fujian 352100 (CN)
(74) Representative: Lorenz Seidler Gossel Part. mbB
(86) International application number: PCT/CN2025/099393
(87) International publication number: WO 2026/012020

(57) **Abstract**

Provided are a battery cell, a battery, and an electric device. The battery cell comprises a casing, an electrode assembly, an electrode terminal, and a pressure relief mechanism; the casing has a wall portion; the electrode assembly is accommodated in the casing; the electrode assembly comprises a first electrode lead-out portion and a second electrode lead-out portion; the polarity of the first electrode lead-out portion is opposite to the polarity of the second electrode lead-out portion; the first electrode lead-out portion is welded to the wall portion to form a weld mark portion; the electrode terminal is mounted on the wall portion in an insulated manner, and the electrode terminal is electrically connected to the second electrode lead-out portion; the pressure relief mechanism is arranged on the wall portion and comprises a weak portion, and the weak portion is configured to at least partially crack when the battery cell releases pressure; in the direction perpendicular to the thickness direction of the wall portion, the weak portion is located between the weld mark portion and the electrode terminal. The first electrode lead-out portion is electrically connected to the wall portion, and the second electrode lead-out portion is electrically connected to the electrode terminal, so that the electrical energy of the electrode assembly can be outputted by means of the wall portion and the electrode terminal, thereby reducing the number of electrode terminals, reducing the occupation of the internal space of a battery, and improving the energy density.

## Description

### CROSS-REFERENCE TO RELATED APPLICATION

The present application claims priority to Chinese Patent Application (Application No. 2024109311480), filed on July 11, 2024 and entitled "BATTERY CELL, BATTERY, AND ELECTRIC DEVICE", the content of which is incorporated herein by reference in its entirety.

### TECHNICAL FIELD

The present application relates to the field of batteries, and in particular, to a battery cell, a battery, and an electric device.

### BACKGROUND

Batteries are widely used in the new energy field, such as in electric vehicles and new energy vehicles. New energy vehicles and electric vehicles have become a new trend in the development of the automobile industry. Battery technology advancement requires consideration of various design factors at the same time, such as performance parameters including battery service life, discharge capacity, and charging and discharging rate. In addition, the energy density of batteries also needs to be considered. However, the energy density of current batteries is low.

### SUMMARY

An objective of embodiments of the present application is to provide a battery cell, a battery, and an electric device, which aim to solve the problem of low energy density of batteries in the related art.

In a first aspect, the embodiments of the present application provide a battery cell. The battery cell includes a shell, an electrode assembly, and an electrode terminal. The shell is provided with a wall part. The electrode assembly is accommodated in the shell, the electrode assembly includes a first electrode lead-out part and a second electrode lead-out part, a polarity of the first electrode lead-out part is opposite to a polarity of the second electrode lead-out part, and the first electrode lead-out part is electrically connected to the wall part. The electrode terminal is mounted on the wall part in an insulated manner, and the electrode terminal is electrically connected to the second electrode lead-out part.

In the above technical solution, the first electrode lead-out part is electrically connected to the wall part, and the second electrode lead-out part is electrically connected to the electrode terminal, such that electric energy of the electrode assembly can be output or electric energy can be input to the electrode assembly through the wall part and the electrode terminal. In one aspect, the number of electrode terminals provided can be reduced, thereby reducing the cost, reducing the occupation of internal space of a battery, and improving the energy density. In another aspect, an information acquisition device, after being electrically connected to the wall part, can acquire use information of the battery cell, thereby facilitating the connection of the information acquisition device to the battery cell and data acquisition, helping to reduce the difficulty of data acquisition of the battery cell, and further reducing the production and manufacturing costs.

As an optional technical solution of the embodiments of the present application, the first electrode lead-out part is connected to the wall part by welding to form a weld mark part. The battery cell includes a pressure relief mechanism, the pressure relief mechanism is disposed on the wall part, the pressure relief mechanism includes a weak part, and the pressure relief mechanism is configured to be capable of cracking along at least a part of the weak part when the battery cell is subjected to pressure relief. In a direction perpendicular to a thickness direction of the wall part, the weak part is disposed between the weld mark part and the electrode terminal.

In the above technical solution, by providing the pressure relief mechanism, the pressure relief mechanism can crack along at least a part of the weak part when the battery cell is subjected to pressure relief, so as to release the internal pressure of the battery cell. In the direction perpendicular to the thickness direction of the wall part, the weak part is disposed between the weld mark part and the electrode terminal, such that a large opening can be opened when the weak part cracks, which is conducive to rapid pressure relief of the battery cell.

As an optional technical solution of the embodiments of the present application, the weak part is of an annular structure disposed around the electrode terminal, and in the direction perpendicular to the thickness direction of the wall part, a minimum distance between the weak part and the weld mark part is less than a minimum distance between the weak part and the electrode terminal.

In the above technical solution, the weak part is of an annular structure disposed around the electrode terminal, and the weak part divides the pressure relief mechanism into two parts, with one part located on an outer side of the weak part and the other part located on an inner side of the weak part. In the direction perpendicular to the thickness direction of the wall part, by setting the minimum distance between the weak part and the weld mark part to be less than the minimum distance between the weak part and the electrode terminal, that is, by disposing the weak part to be proximal to the weld mark part, when the battery cell is subjected to pressure relief, a part of the pressure relief mechanism located on the inner side of the weak part is subjected to a large acting force exerted by the gas, and the part of the pressure relief mechanism located on the inner side of the weak part can be opened for pressure relief to form a large opening for gas discharging. When the battery cell is subjected to pressure relief, the pressure relief area is large, which is conducive to rapid pressure relief of the battery cell.

As an optional technical solution of the embodiments of the present application, the weak part is of an annular structure disposed around the electrode terminal, and in the direction perpendicular to the thickness direction of the wall part, the minimum distance between the weak part and the weld mark part is greater than the minimum distance between the weak part and the electrode terminal.

In the above technical solution, the weak part is of an annular structure disposed around the electrode terminal, and the weak part divides the pressure relief mechanism into two parts, with one part located on the outer side of the weak part and the other part located on the inner side of the weak part. In the direction perpendicular to the thickness direction of the wall part, by setting the minimum distance between the weak part and the weld mark part to be greater than the minimum distance between the weak part and the electrode terminal, that is, by disposing the weak part to be proximal to the electrode terminal, when the battery cell is subjected to pressure relief, a part of the pressure relief mechanism located on the outer side of the weak part is subjected to a large acting force exerted by the gas, and the part of the pressure relief mechanism located on the outer side of the weak part can be opened for pressure relief, such that the electrode terminal is not easily separated from the wall part and is less likely to come into contact with other electrical connection components to cause a short circuit.

As an optional technical solution of the embodiments of the present application, in the direction perpendicular to the thickness direction of the wall part, a minimum distance between the weak part and the weld mark part is A, satisfying: A ≥ 3 mm.

In the above technical solution, by setting the minimum distance between the weak part and the weld mark part in the direction perpendicular to the thickness direction of the wall part to be greater than or equal to 3 mm, the impact of high heat on the weak part during welding of the first electrode lead-out part and the wall part can be reduced, thereby reducing the risk of premature cracking of the weak part and improving the service life of the battery cell.

As an optional technical solution of the embodiments of the present application, in the direction perpendicular to the thickness direction of the wall part, a minimum distance between the weak part and the electrode terminal is B, satisfying: B ≥ 4 mm.

In the above technical solution, by setting the minimum distance between the weak part and the electrode terminal in the direction perpendicular to the thickness direction of the wall part to be greater than or equal to 4 mm, the distance between the weak part and the electrode unit is large, which can reduce the inhibiting effect of the electrode terminal on the deformation of the weak part, thereby facilitating the timely cracking of the weak part when the battery cell is subjected to pressure relief, and improving the timeliness of pressure relief of the battery cell.

As an optional technical solution of the embodiments of the present application, the weld mark part and the weak part are each of an annular structure disposed around the electrode terminal.

In the above technical solution, the weld mark part is of an annular structure, and the weld mark part is disposed around an outer side of the electrode terminal. In this way, the first electrode lead-out part can be relatively stably connected to the wall part and have a large current passage area. By configuring the weak part as an annular structure, when the battery cell is subjected to pressure relief, the pressure relief mechanism can crack along the weak part, thereby forming a large opening and facilitating rapid pressure relief of the battery cell.

As an optional technical solution of the embodiments of the present application, the pressure relief mechanism is provided with a pressure relief groove, and the weak part is formed in a region of the pressure relief mechanism where the pressure relief groove is provided.

In the above technical solution, forming the weak part by forming the pressure relief groove on the pressure relief mechanism is simple and convenient, and the cost is low.

As an optional technical solution of the embodiments of the present application, the pressure relief groove is disposed on a surface of the pressure relief mechanism facing away from an interior of the shell.

In the above technical solution, by disposing the pressure relief groove on the surface of the pressure relief mechanism facing away from the interior of the shell body, the weak part can crack under a low tension, which facilitates the cracking.

As an optional technical solution of the embodiments of the present application, the first electrode lead-out part includes a first tab and a first current collecting member, the first current collecting member is electrically connected to the first tab and the wall part, and the first current collecting member is connected to the wall part by welding to form the weld mark part.

In the above technical solution, by providing the first current collecting member, the electrical connection between the first tab and the wall part is facilitated, and the difficulty in connecting the electrode assembly to the wall part is reduced.

As an optional technical solution of the embodiments of the present application, the first current collecting member and the wall part are arranged in the thickness direction of the wall part, the wall part is welded to the first current collecting member in a penetrating manner, and a part of the weld mark part protrudes from a surface of the wall part facing away from an interior of the shell.

In the above technical solution, connecting the first current collecting member to the wall part by welding in a penetrating manner is simple and convenient, and the welding quality is high. In addition, during the welding in a penetrating manner, the welding direction is substantially perpendicular to the thickness direction of the wall part, which can reduce the impact on the weak part, reduce the risk of premature cracking of the weak part, and is conducive to improving the service life of the battery cell.

As an optional technical solution of the embodiments of the present application, the pressure relief mechanism and the wall part are integrally formed.

In the above technical solution, by configuring the pressure relief mechanism and the wall part to be integrally formed, no additional welding or bonding process is required, which is conducive to reducing the risk of liquid leakage of the pressure relief mechanism. In addition, during production, it is easy to achieve relatively consistent burst pressures among a plurality of processed battery cells.

As an optional technical solution of the embodiments of the present application, the pressure relief mechanism is disposed separately from the wall part, the wall part is provided with a pressure relief hole, and the pressure relief mechanism is mounted on the wall part and covers the pressure relief hole.

In the above technical solution, by configuring the pressure relief mechanism to be disposed separately from the wall part and mounted on the wall part, the processing and manufacturing are facilitated.

As an optional technical solution of the embodiments of the present application, the first electrode lead-out part includes a first tab, the second electrode lead-out part includes a second tab, and in the thickness direction of the wall part, the first tab and the second tab are formed at a same end of the electrode assembly.

In the above technical solution, by forming the first tab and the second tab at the same end of the electrode assembly, the electrical connection between the first tab and the wall part and the electrical connection between the second tab and the electrode terminal become simple and convenient, which is conducive to reducing the production and manufacturing costs.

As an optional technical solution of the embodiments of the present application, the shell includes a shell body and an end cover. The shell body is provided with an accommodating space with an opening at one end, and the accommodating space is configured to accommodate the electrode assembly; the end cover is connected to the shell body and closes the opening, where the end cover is the wall part.

In the above technical solution, when the end cover is the wall part, the first electrode lead-out part is connected to the end cover, and the electrode terminal is disposed on the end cover, such that the manufacturing is simple and convenient.

As an optional technical solution of the embodiments of the present application, the battery cell is a cylindrical battery cell.

In a second aspect, the embodiments of the present application further provide a battery. The battery includes the above battery cell.

In a third aspect, the embodiments of the present application further provide an electric device. The electric device includes the above battery cell, and the battery cell is configured to provide electric energy for the electric device.

### BRIEF DESCRIPTION OF THE DRAWINGS

To more clearly illustrate the technical solutions in embodiments of the present application, the drawings required for use in the embodiments will be briefly described below. It should be understood that the following drawings only illustrate some embodiments of the present application and therefore should not be considered as limiting the scope of the present application, and other related drawings can be derived from these drawings by those of ordinary skill in the art without creative efforts.
FIG. 1 is a schematic structural diagram of a vehicle according to some embodiments of the present application;
FIG. 2 is an exploded view of a battery according to some embodiments of the present application;
FIG. 3 is a schematic structural diagram of a battery cell according to some embodiments of the present application;
FIG. 4 is an exploded view of a battery cell according to some embodiments of the present application;
FIG. 5 is a schematic top view of a battery cell according to some embodiments of the present application;
FIG. 6 is a cross-sectional view of position A-A in FIG. 5;
FIG. 7 is an enlarged view of position B in FIG. 6;
FIG. 8 is a schematic structural diagram of a battery cell according to some other embodiments of the present application;
FIG. 9 is a schematic top view of a battery cell according to some other embodiments of the present application;
FIG. 10 is a cross-sectional view of position C-C in FIG. 9; and
FIG. 11 is an enlarged view of position D in FIG. 10.

Reference numerals: 10-case; 11-first part; 12-second part; 20-battery cell; 21-shell; 211-shell body; 212-end cover; 23-wall part; 231-weak part; 232-pressure relief groove; 24-electrode terminal; 25-electrode assembly; 251-first electrode lead-out part; 2511-first tab; 2512-first current collecting member; 252-second electrode lead-out part; 2521-second tab; 2522-second current collecting member; 26-lower plastic part; 28-weld mark part; 29-insulating member; 100-battery; 200-controller; 300-motor; 1000-vehicle.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is apparent that the described embodiments are some, but not all, of the embodiments of the present application. Based on the embodiments in the present application, all other embodiments obtained by those of ordinary skill in the art without creative efforts shall fall within the scope of protection of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "interconnect", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the above terms in the present application can be understood based on specific conditions.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device, are only exemplary and should not be construed as limiting the present application in any way.

The term "plurality of" used in the present application refers to two or more (including two).

In the embodiments of the present application, the battery cell may be a secondary battery. The secondary battery refers to a battery cell that can be reused by activating the active material through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like. This is not limited in the embodiments of the present application.

The battery cell generally includes an electrode assembly. The electrode assembly includes a positive electrode, a negative electrode, and a separator. During the charging and discharging of the battery cell, active ions (such as lithium ions) are intercalated and deintercalated back and forth between the positive electrode and the negative electrode. The separator is disposed between the positive electrode and the negative electrode to prevent the positive electrode and the negative electrode from short-circuiting to a certain extent while allowing the passage of active ions.

In some embodiments, the positive electrode may be a positive electrode plate, and the positive electrode plate may include a positive electrode current collector and a positive electrode active material disposed on at least one surface of the positive electrode current collector.

As an example, the positive electrode current collector is provided with two surfaces opposite to each other in its own thickness direction, and the positive electrode active material is disposed on either or both of the two opposite surfaces of the positive electrode current collector.

As an example, a metal foil or a composite current collector may be used as the positive electrode current collector. For example, for the metal foil, aluminum treated with silver on the surface, stainless steel treated with silver on the surface, stainless steel, copper, aluminum, nickel, carbon electrode, carbon, nickel, titanium, or the like may be used. The composite current collector may include a polymer material base layer and a metal layer. The composite current collector may be formed by forming a metal material (aluminum, aluminum alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene).

As an example, the positive electrode active material may include at least one of the following materials: a lithium-containing phosphate, a lithium transition metal oxide, and respective modified compounds thereof. However, the present application is not limited to these materials, and other conventional materials that can be used as positive electrode active materials for batteries may also be used. These positive electrode active materials may be used alone or in a combination of two or more. Examples of the lithium-containing phosphate may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), or LiNi_{0.8}Co_{0.1}Mn_{0.1}O₂ (also referred to as NCM₈₁₁)), a lithium nickel cobalt aluminum oxide (such as LiNi_{0.85}Co_{0.15}Al_{0.05}O₂), and modified compounds thereof.

In some embodiments, a foam metal may be used as the positive electrode. The foam metal may be foam nickel, foam copper, foam aluminum, a foam alloy, or the like. When the foam metal is used as the positive electrode, the surface of the foam metal may not be provided with the positive electrode active material. Certainly, the positive electrode active material may also be provided. As an example, a lithium source material, a potassium metal, or a sodium metal may also be incorporated into and/or deposited in the foam metal; the lithium source material is a lithium metal and/or a lithium-rich material.

In some embodiments, the negative electrode may be a negative electrode plate, and the negative electrode plate may include a negative electrode current collector.

As an example, a metal foil, a foam metal, or a composite current collector may be used as the negative electrode current collector. For example, for the metal foil, aluminum or stainless steel treated with silver on the surface, stainless steel, copper, aluminum, nickel, carbon electrode, nickel, titanium, or the like may be used. The foam metal may be foam nickel, foam copper, foam aluminum, a foam alloy, or the like. The composite current collector may include a polymer material base layer and a metal layer. The composite current collector may be formed by forming a metal material (copper, copper alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene).

As an example, the negative electrode plate may include a negative electrode current collector and a negative electrode active material disposed on at least one surface of the negative electrode current collector.

As an example, the negative electrode current collector is provided with two surfaces opposite to each other in its own thickness direction, and the negative electrode active material is disposed on either or both of the two opposite surfaces of the negative electrode current collector.

As an example, the negative electrode active material may be a negative electrode active material known in the art for use in battery cells. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more.

In some embodiments, the material of the positive electrode current collector may be aluminum, and the material of the negative electrode current collector may be copper.

In some embodiments, the electrode assembly further includes a separator. The separator is disposed between the positive electrode and the negative electrode.

In some embodiments, the separator is a separation film. The separation film may be of various types, and any porous-structure separation film known to have good chemical stability and mechanical stability may be selected and used.

As an example, the material of the separation film may include at least one of glass fiber, nonwoven fabric, polyethylene, polypropylene, and polyvinylidene fluoride. The separation film may be a single-layer film or a multi-layer composite film. When the separation film is a multi-layer composite film, the materials of the layers may be the same or different. The separator may be a separate component located between the positive electrode and the negative electrode, or may be attached to the surfaces of the positive electrode and the negative electrode.

In some embodiments, the separator is a solid-state electrolyte. The solid-state electrolyte is disposed between the positive electrode and the negative electrode, serving both to transport ions and to isolate the positive electrode from the negative electrode.

In some embodiments, the battery cell further includes an electrolyte that serves to conduct ions between the positive electrode and the negative electrode. The electrolyte may be liquid-state, gel-state, or solid-state. The liquid-state electrolyte includes an electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone. The solvent may also be selected from an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel-state electrolyte includes a skeleton network with a polymer as an electrolyte, combined with an ionic liquid-lithium salt.

The solid-state electrolyte includes a polymer solid-state electrolyte, an inorganic solid-state electrolyte, and a composite solid-state electrolyte.

As an example, the polymer solid-state electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

As an example, the inorganic solid-state electrolyte may include one or more of an oxide solid electrolyte (crystalline perovskite, sodium superionic conductor, garnet, and amorphous LiPON thin film), a sulfide solid electrolyte (crystalline lithium superionic conductor (lithium germanium phosphorus sulfur or argyrodite), and amorphous sulfide), a halide solid electrolyte, a nitride solid electrolyte, and a hydride solid electrolyte.

As an example, the composite solid-state electrolyte is formed by adding an inorganic solid-state electrolyte filler to the polymer solid electrolyte.

In some embodiments, the electrode assembly is of a wound structure. The positive electrode plate and the negative electrode plate are wound to form a wound structure.

In some embodiments, the electrode assembly is of a stacked structure.

As an example, a plurality of positive electrode plates and a plurality of negative electrode plates may be provided, and the plurality of positive electrode plates and the plurality of negative electrode plates are alternately stacked.

As an example, a plurality of positive electrode plates may be provided, and the negative electrode plate is folded to form a plurality of stacked folded segments, with one positive electrode plate disposed between adjacent folded segments.

As an example, the positive electrode plate and the negative electrode plate are both folded to form a plurality of stacked folded segments.

As an example, a plurality of separators may be provided, and each separator is disposed between any adjacent positive electrode plates or negative electrode plates separately.

As an example, the separators may be disposed continuously between any adjacent positive electrode plates or negative electrode plates by folding or winding.

In some embodiments, the shape of the electrode assembly may be cylindrical, flat, polygonal prismatic, or the like.

In some embodiments, the electrode assembly is provided with tabs that can conduct current out of the electrode assembly. The tabs include a positive electrode tab and a negative electrode tab.

In some embodiments, the battery cell may include a shell. The shell is configured to encapsulate components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

In some embodiments, the shell may be of a sealing structure or a non-sealing structure. As an example, when the shell is of a sealing structure, the shell can protect the electrode assembly and prevent electrolyte leakage and the like to a certain extent. When the shell is of a non-sealing structure, the shell can protect the electrode assembly, a sealing bag may be further included between the shell and the electrode assembly, and the sealing bag is configured to encapsulate the electrode assembly, the electrolyte, and the like. Specifically, the sealing bag may be a bag-shaped insulating member or aluminum-plastic film.

As an example, the battery cell may be a cylindrical battery cell, a prismatic battery cell, a pouch battery cell, or a battery cell in other shapes. The prismatic battery cell includes, but is not limited to, a square-shell battery cell, a blade-shaped battery cell, and a polygonal prismatic battery, and the polygonal prismatic battery is, for example, a hexagonal prismatic battery.

The battery mentioned in the embodiments of the present application refers to a single physical module including one or a plurality of battery cells to provide higher voltage and capacity.

In some embodiments, the battery may be a battery module, and when a plurality of battery cells are provided, the plurality of battery cells are arranged and fixed to form one battery module.

In some embodiments, the battery may be a battery pack. The battery pack includes a case and a battery cell, and the battery cell or the battery module is accommodated in the case.

In some embodiments, the case may be a part of the chassis structure of the vehicle. For example, a part of the case may become at least a part of the floor of the vehicle, or a part of the case may become at least a part of a crossbeam and a longitudinal beam of the vehicle.

In some embodiments, the battery may be an energy storage device. The energy storage device includes an energy storage container, an energy storage electrical cabinet, and the like.

At present, judging from the trends of the market situation, the application of batteries is becoming increasingly widespread. Batteries are not only applied in energy storage power systems such as hydropower, thermal power, wind power, and solar power stations, but also widely applied in electric transportation vehicles such as electric bicycles, electric motorcycles, or electric vehicles, as well as in military equipment, aerospace, and other fields. With the continuous expansion of the application field of batteries, the market demand for batteries is also constantly increasing.

Battery technology advancement requires consideration of various design factors at the same time, such as performance parameters including battery service life, discharge capacity, and charging and discharging rate. In addition, the energy density of batteries also needs to be considered. However, the energy density of current batteries is low.

In the prior art, a battery cell includes a positive electrode terminal and a negative electrode terminal. The positive electrode terminal is electrically connected to a positive electrode tab, and the negative electrode terminal is electrically connected to a negative electrode tab, so as to output electric energy of an electrode assembly or input electric energy to the electrode assembly. The plurality of electrode terminals occupy a large amount of internal space of a battery, resulting in a decrease in the energy density of the battery.

In view of this, the embodiments of the present application provide a battery cell. The battery cell includes a shell, an electrode assembly, and an electrode terminal. The shell is provided with a wall part, and the electrode assembly is accommodated in the shell. The electrode assembly includes a first electrode lead-out part and a second electrode lead-out part, and a polarity of the first electrode lead-out part is opposite to a polarity of the second electrode lead-out part. The first electrode lead-out part is electrically connected to the wall part, the electrode terminal is mounted on the wall part in an insulated manner, and the electrode terminal is electrically connected to the second electrode lead-out part.

The first electrode lead-out part is electrically connected to the wall part, and the second electrode lead-out part is electrically connected to the electrode terminal, such that electric energy of the electrode assembly can be output or electric energy can be input to the electrode assembly through the wall part and the electrode terminal. In one aspect, the number of electrode terminals provided can be reduced, thereby reducing the cost, reducing the occupation of internal space of a battery, and improving the energy density. In another aspect, an information acquisition device, after being electrically connected to the wall part, can acquire use information of the battery cell, thereby facilitating the connection of the information acquisition device to the battery cell and data acquisition, helping to reduce the difficulty of data acquisition of the battery cell, and further reducing the production and manufacturing costs.

The technical solutions described in the embodiments of the present application are applicable to batteries and electric devices using batteries.

The electric device may be a vehicle, a mobile phone, a portable device, a laptop computer, a ship, a spacecraft, an electric toy, an electric tool, or the like. The spacecraft includes an airplane, a rocket, a space shuttle, a spaceship, and the like; the electric toy includes a stationary or mobile electric toy, such as a game console, an electric vehicle toy, an electric ship toy, and an electric airplane toy; the electric tool includes an electric metal cutting tool, an electric grinding tool, an electric assembling tool, and an electric tool for railways, including, but is not limited to, an electric drill, an electric grinder, an electric wrench, an electric screwdriver, an electric hammer, an electric impact drill, a concrete vibrator, and an electric planer.

For ease of explanation, the following embodiments will be described by taking a vehicle 1000 as an example of the electric device.

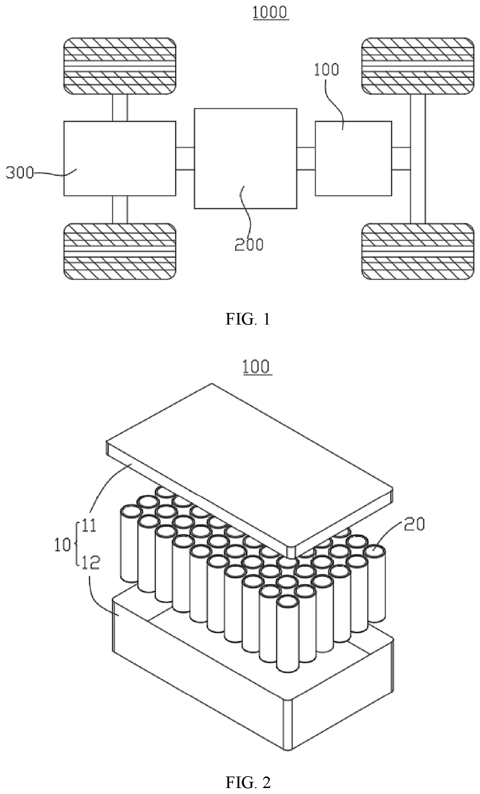

Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 100 is disposed inside the vehicle 1000, and the battery 100 may be disposed at the bottom, head, or tail of the vehicle 1000. The battery 100 may be configured to supply power to the vehicle 1000. For example, the battery 100 may serve as an operation power source for the vehicle 1000. The vehicle 1000 may further include a controller 200 and a motor 300. The controller 200 is configured to control the battery 100 to supply power to the motor 300, e.g., for the operation power needed by the vehicle 1000 for start-up, navigation, and driving.

In some embodiments of the present application, the battery 100 may not only serve as the operation power source for the vehicle 1000, but also as a driving power source for the vehicle 1000 to, replacing or partially replacing fuel or natural gas, provide driving power for the vehicle 1000.

Referring to FIG. 2, FIG. 2 is an exploded view of a battery 100 according to some embodiments of the present application. The battery 100 includes a case 10 and battery cells 20. The battery cells 20 are accommodated in the case 10. The case 10 is configured to provide an accommodating space for the battery cells 20, and the case 10 may be of various structures. In some embodiments, the case 10 may include a first part 11 and a second part 12. The first part 11 and the second part 12 are lidded with each other, and the first part 11 and the second part 12 jointly define an accommodating space for accommodating the battery cells 20. The second part 12 may be of a hollow structure with one end open, and the first part 11 may be of a plate-shaped structure. The open side of the second part 12 is lidded with the first part 11, such that the first part 11 and the second part 12 jointly define the accommodating space. The first part 11 and the second part 12 may also both be of a hollow structure with one side open, and the open side of the second part 12 is lidded with the open side of the first part 11. Certainly, the case 10 formed by the first part 11 and the second part 12 may be in various shapes, such as a cylinder and a rectangular parallelepiped.

In the battery 100, a plurality of battery cells 20 may be provided, and the plurality of battery cells 20 may be connected in series, in parallel, or in series-parallel. The series-parallel connection means that both series connection and parallel connection are present for the connection among the plurality of battery cells 20. The plurality of battery cells 20 may be directly connected in series, in parallel, or in series-parallel, and then the whole formed by the plurality of battery cells 20 is accommodated in the case 10. Certainly, the situation may also be that in the battery 100, the plurality of battery cells 20 are first connected in series, in parallel, or in series-parallel to form battery modules, and then the plurality of battery modules are connected in series, in parallel, or in series-parallel to form a whole and accommodated in the case 10. The battery 100 may further include other structures. For example, the battery 100 may further include a busbar component for achieving an electrical connection among the plurality of battery cells 20.

Each battery cell 20 may be a secondary battery cell or a primary battery cell; it may also be a lithium-sulfur battery cell, a sodium-ion battery cell, or a magnesium-ion battery cell, but is not limited thereto. The battery cell 20 may be cylindrical, flat, rectangular parallelepiped-shaped, or in other shapes.

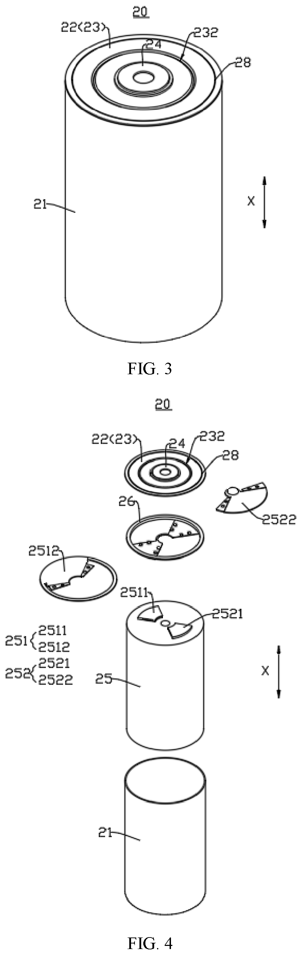

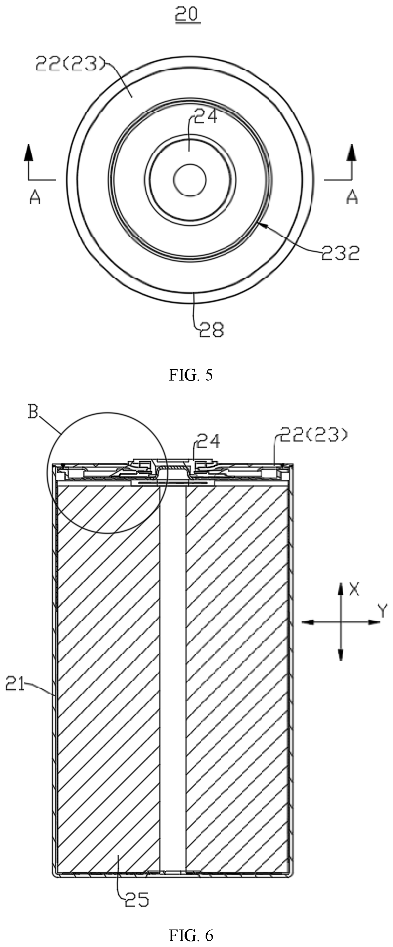

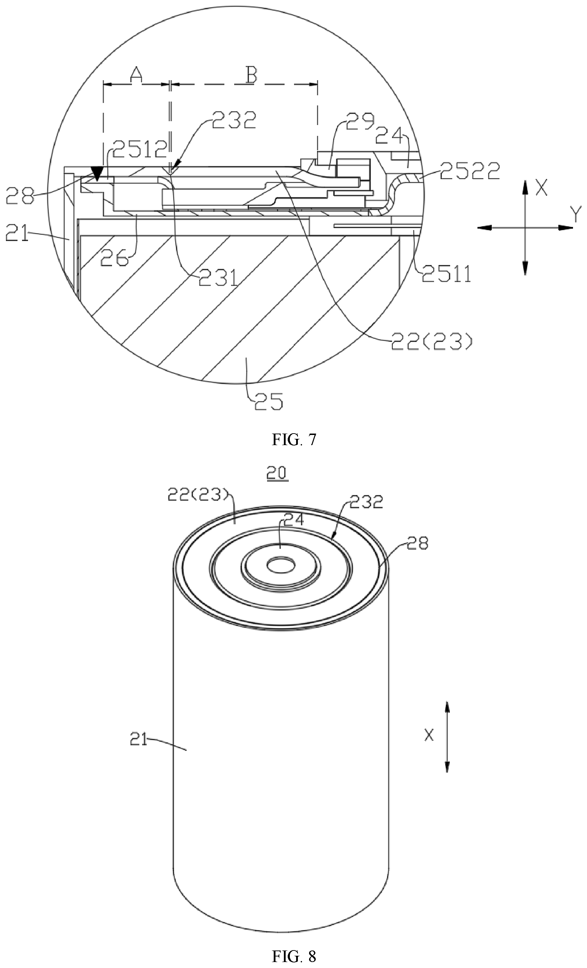

Referring to FIGs. 3, 4, 5, 6, and 7, FIG. 3 is a schematic structural diagram of a battery cell 20 according to some embodiments of the present application. FIG. 4 is an exploded view of a battery cell 20 according to some embodiments of the present application. FIG. 5 is a schematic top view of a battery cell 20 according to some embodiments of the present application. FIG. 6 is a cross-sectional view of position A-A in FIG. 5. FIG. 7 is an enlarged view of position B in FIG. 6. The embodiments of the present application provide a battery cell 20. The battery cell 20 includes a shell 21, an electrode assembly 25, and an electrode terminal 24. The shell 21 is provided with a wall part 23, and the electrode assembly 25 is accommodated in the shell 21. The electrode assembly 25 includes a first electrode lead-out part 251 and a second electrode lead-out part 252, and a polarity of the first electrode lead-out part 251 is opposite to a polarity of the second electrode lead-out part 252. The first electrode lead-out part 251 is electrically connected to the wall part 23, the electrode terminal 24 is mounted on the wall part 23 in an insulated manner, and the electrode terminal 24 is electrically connected to the second electrode lead-out part 252.

The battery cell 20 refers to the smallest unit forming a battery 100.

The shell 21 includes a shell body 211 and an end cover 212. The shell body 211 is provided with an accommodating space with an opening at one end, and the accommodating space is configured to accommodate the electrode assembly 25. The end cover 212 is connected to the shell body 211 and closes the opening.

The end cover 212 refers to a component that lids the opening of the shell body 211 to isolate the internal environment of the battery cell 20 from the external environment. Without limitation, the shape of the end cover 212 may be adapted to the shape of the shell body 211 to cooperate with the shell body 211. Optionally, the end cover 212 may be made of a material with a certain hardness and strength (for example, an aluminum alloy), such that the end cover 212 is not easily deformed when being compressed or collided. This enables the battery cell 20 to have higher structural strength, and the reliability can also be improved. The end cover 212 may also be made of materials including, but not limited to, copper, iron, aluminum, stainless steel, aluminum alloy, plastic, and the like. The battery cell 20 further includes a lower plastic part 26. The lower plastic part 26 is disposed on an inner side of the end cover 212, and the lower plastic part 26 may be configured to isolate an electrical connection component in the shell body 211 from the end cover 212 to reduce the risk of a short circuit. For example, the lower plastic part 26 may be made of plastic, rubber, or the like.

The shell body 211 is a component configured to form the internal environment of the battery cell 20 in combination with the end cover 212. The formed internal environment may be used to accommodate the electrode assembly 25, an electrolytic solution, and other components. The shell body 211 and the end cover 212 may be independent components. An opening may be formed in the shell body 211, and at the opening, the end cover 212 lids the opening to form the internal environment of the battery cell 20. Without limitation, the end cover 212 and the shell body 211 may also be integrated. Specifically, the end cover 212 and the shell body 211 may form a common joint surface before other components are placed in the shell, and when the interior of the shell body 211 needs to be encapsulated, the shell body 211 is lidded with the end cover 212. The shell body 211 may be in various shapes and dimensions, such as a rectangular parallelepiped, a cylinder, and a hexagonal prism. Specifically, the shape of the shell body 211 may be determined based on the specific shape and dimension of the electrode assembly 25. The shell body 211 may be made of materials including, but not limited to, copper, iron, aluminum, stainless steel, aluminum alloy, plastic, and the like.

The wall part 23 may be the end cover 212 of the shell 21, or may be one wall of the shell body 211 of the shell 21. In some embodiments, as shown in FIGs. 3 and 4, the wall part 23 is the end cover 212. In some other embodiments, the wall part 23 may be a bottom wall, opposite to the end cover 212, of the shell body 211. In yet other embodiments, the wall part 23 may also be a side wall, adjacent to and connected to the end cover 212, of the shell body 211.

The electrode assembly 25 is a component where the electrochemical reaction occurs in the battery cell 20. One or more electrode assemblies 25 may be accommodated in the shell 21. The electrode assembly 25 is mainly formed by winding or stacking a positive electrode plate and a negative electrode plate, and a separation film is usually disposed between the positive electrode plate and the negative electrode plate. The parts of the positive electrode plate and the negative electrode plate that contain active substances constitute the main body of the electrode assembly 25, and the parts of the positive electrode plate and the negative electrode plate that do not contain active substances each constitute a tab. The positive electrode tab and the negative electrode tab may be located together at one end of the main body or respectively at two ends of the main body. During the charging and discharging of the battery 100, the positive electrode active substance and the negative electrode active substance react with the electrolytic solution.

The first electrode lead-out part 251 is a structure configured to lead out electric energy of the main body or introduce electric energy into the main body. The first electrode lead-out part 251 includes a first tab 2511. The first tab 2511 is the positive electrode tab or the negative electrode tab described above, and the first tab 2511 may be directly connected to the wall part 23. In some other embodiments, the first electrode lead-out part 251 may further include other electrical connection components connected to the first tab 2511. For example, the first electrode lead-out part 251 may further include a first current collecting member 2512, and the first current collecting member 2512 is connected to the first tab 2511 and the wall part 23, so as to guide electric energy of the electrode assembly 25 to the wall part 23 or receive electric energy introduced from the wall part 23.

The first tab 2511 may be the positive electrode tab or the negative electrode tab. When the first tab 2511 is the positive electrode tab, the wall part 23 serves as the positive electrode of the battery cell 20. When the first tab 2511 is the negative electrode tab, the wall part 23 serves as the negative electrode of the battery cell 20.

The first electrode lead-out part 251 can be used to determine which wall of the shell 21 is the wall part 23. For example, when the first electrode lead-out part 251 is connected to the end cover 212, the end cover 212 is the wall part 23. When the first electrode lead-out part 251 is connected to the bottom wall of the shell body 211, the bottom wall is the wall part 23. When the first electrode lead-out part 251 is connected to the side wall of the shell body 211, the side wall is the wall part 23.

The electrode terminal 24 is configured to be electrically connected to the tab of the electrode assembly 25 to input or output the electric energy of the battery cell 20. The electrode terminal 24 may be directly connected to the tab. For example, the electrode terminal 24 is directly welded to the tab. The electrode terminal 24 may also be indirectly connected to the tab. For example, the electrode terminal 24 may be indirectly connected to the tab via the current collecting member.

The electrode terminal 24 is mounted on the wall part 23 in an insulated manner; that is, the electrode terminal 24 is insulated and isolated from the wall part 23. Optionally, the battery cell 20 includes an insulating member 29. The insulating member 29 is disposed between the electrode terminal 24 and the wall part 23 to insulate and isolate the electrode terminal 24 from the wall part 23.

The second electrode lead-out part 252 is a structure configured to lead out the electric energy of the electrode assembly 25 or introduce electric energy into the electrode assembly 25. The second electrode lead-out part 252 includes a second tab 2521. The second tab 2521 is the negative electrode tab or the positive electrode tab described above, and the second tab 2521 may be directly connected to the electrode terminal 24. In some other embodiments, the second electrode lead-out part 252 may further include other electrical connection components connected to the second tab 2521. For example, the second electrode lead-out part 252 may further include a second current collecting member 2522, and the second current collecting member 2522 is connected to the second tab 2521 and the electrode terminal 24, so as to guide the electric energy of the electrode assembly 25 to the electrode terminal 24 or receive electric energy introduced from the electrode terminal 24.

The polarity of the first electrode lead-out part 251 is opposite to the polarity of the second electrode lead-out part 252. For example, when the first electrode lead-out part 251 is a positive electrode lead-out part, the second electrode lead-out part 252 is a negative electrode lead-out part. When the first electrode lead-out part 251 is the negative electrode lead-out part, the second electrode lead-out part 252 is the positive electrode lead-out part. Correspondingly, a polarity of the first tab 2511 is opposite to a polarity of the second tab 2521. For example, when the first tab 2511 is the positive electrode tab, the second tab 2521 is the negative electrode tab. When the first tab 2511 is the negative electrode tab, the second tab 2521 is the positive electrode tab.

The first electrode lead-out part 251 is electrically connected to the wall part 23, and the second electrode lead-out part 252 is electrically connected to the electrode terminal 24, such that the electric energy of the electrode assembly 25 can be output or electric energy can be input to the electrode assembly 25 through the wall part 23 and the electrode terminal 24. In one aspect, the number of electrode terminals 24 provided can be reduced, thereby reducing the cost, reducing the occupation of the internal space of the battery 100, and improving the energy density. In another aspect, an information acquisition device, after being electrically connected to the wall part 23, can acquire use information of the battery cell 20, thereby facilitating the connection of the information acquisition device to the battery cell 20 and data acquisition, helping to reduce the difficulty of data acquisition of the battery cell 20, and further reducing the production and manufacturing costs.

Referring to FIGs. 3, 4, 5, 6, and 7, in some embodiments, the first electrode lead-out part 251 is connected to the wall part 23 by welding to form a weld mark part 28. The battery cell 20 includes a pressure relief mechanism, and the pressure relief mechanism is disposed on the wall part 23. The pressure relief mechanism includes a weak part 231, and the pressure relief mechanism is configured to be capable of cracking along at least a part of the weak part 231 when the battery cell 20 is subjected to pressure relief. In a direction perpendicular to a thickness direction of the wall part 23, the weak part 231 is disposed between the weld mark part 28 and the electrode terminal 24.

The weld mark part 28 is a weld mark part 28 left after the first electrode lead-out part 251 is welded to the wall part 23. The welding method is not limited, and may be, for example, gas welding, electric welding, or laser welding.

The pressure relief mechanism is a component configured to open when the internal pressure or temperature of the battery cell 20 reaches a burst pressure, so as to relieve the internal pressure of the battery cell 20. The pressure relief mechanism is disposed on the wall part 23. The pressure relief mechanism may be a component mounted on the wall part 23. In this case, the pressure relief mechanism is disposed separately from the wall part 23 and is connected thereto. For example, the pressure relief mechanism is an anti-explosion sheet mounted on the wall part 23. The pressure relief mechanism may also be a part of the wall part 23. In this case, the pressure relief mechanism and the wall part 23 are integrally formed.

The weak part 231 functions to relieve pressure, and is configured to enable the pressure relief mechanism to crack along the weak part 231 when the internal pressure or temperature of the battery cell 20 reaches a predetermined value, so as to relieve the internal pressure of the battery cell 20. In some embodiments, the strength of the pressure relief mechanism at the position of the weak part 231 may be lower than the strength of the pressure relief mechanism at other positions. In this way, when the internal pressure or temperature of the battery cell 20 reaches the predetermined value, the weak part 231 can crack under the action of the internal pressure, so as to release the internal pressure of the battery cell 20. In some other embodiments, a melting point of the pressure relief mechanism at the position of the weak part 231 may be lower than a melting point of the pressure relief mechanism at other positions. In this way, when the internal pressure or temperature of the battery cell 20 reaches the predetermined value, the weak part 231 can crack under the action of a high temperature, so as to release the internal pressure of the battery cell 20.

The weak part 231 is disposed between the weld mark part 28 and the electrode terminal 24 in the direction perpendicular to the thickness direction of the wall part 23. Referring to FIGs. 6 and 7, the thickness direction of the wall part 23 is the X direction shown in the figures. The direction perpendicular to the thickness direction of the wall part 23 is the Y direction shown in the figures. In the embodiments shown in FIGs. 6 and 7, the battery cell 20 is a cylindrical battery cell, and the wall part 23 is the end cover 212. The direction perpendicular to the thickness direction of the wall part 23 is a radial direction of the end cover 212.

By providing the pressure relief mechanism, the pressure relief mechanism can crack along at least a part of the weak part 231 when the battery cell 20 is subjected to pressure relief, so as to release the internal pressure of the battery cell 20. In the direction perpendicular to the thickness direction of the wall part 23, the weak part 231 is disposed between the weld mark part 28 and the electrode terminal 24, such that a large opening can be opened when the weak part 231 cracks, which is conducive to rapid pressure relief of the battery cell 20.

Referring to FIGs. 3, 4, 5, 6, and 7, in some embodiments, the weak part 231 is of an annular structure disposed around the electrode terminal 24. In the direction perpendicular to the thickness direction of the wall part 23, a minimum distance between the weak part 231 and the weld mark part 28 is less than a minimum distance between the weak part 231 and the electrode terminal 24.

The weak part 231 is of an annular structure, and the weak part 231 is in a closed shape extending along a closed trajectory. For example, the weak part 231 may be in a closed shape such as a circle, an ellipse, a square, or a hexagon. The electrode terminal 24 is disposed on an inner side of the weak part 231.

Referring to FIG. 7, the minimum distance between the weak part 231 and the weld mark part 28 in the direction perpendicular to the thickness direction of the wall part 23 is A, and the minimum distance between the weak part 231 and the electrode terminal 24 in the direction perpendicular to the thickness direction of the wall part 23 is B, satisfying: A < B. In short, in the direction perpendicular to the thickness direction of the wall part 23, the weak part 231 is disposed between the weld mark part 28 and the electrode terminal 24, and the weak part 231 is disposed proximal to the weld mark part 28.

The weak part 231 is of an annular structure disposed around the electrode terminal 24, and the weak part 231 divides the pressure relief mechanism into two parts, with one part located on an outer side of the weak part 231 and the other part located on the inner side of the weak part 231. In the direction perpendicular to the thickness direction of the wall part 23, by setting the minimum distance between the weak part 231 and the weld mark part 28 to be less than the minimum distance between the weak part 231 and the electrode terminal 24, that is, by disposing the weak part 231 to be proximal to the weld mark part 28, when the battery cell 20 is subjected to pressure relief, a part of the pressure relief mechanism located on the inner side of the weak part 231 is subjected to a large acting force exerted by the gas, and the part of the pressure relief mechanism located on the inner side of the weak part 231 can be opened for pressure relief to form a large opening for gas discharging. When the battery cell 20 is subjected to pressure relief, the pressure relief area is large, which is conducive to rapid pressure relief of the battery cell 20.

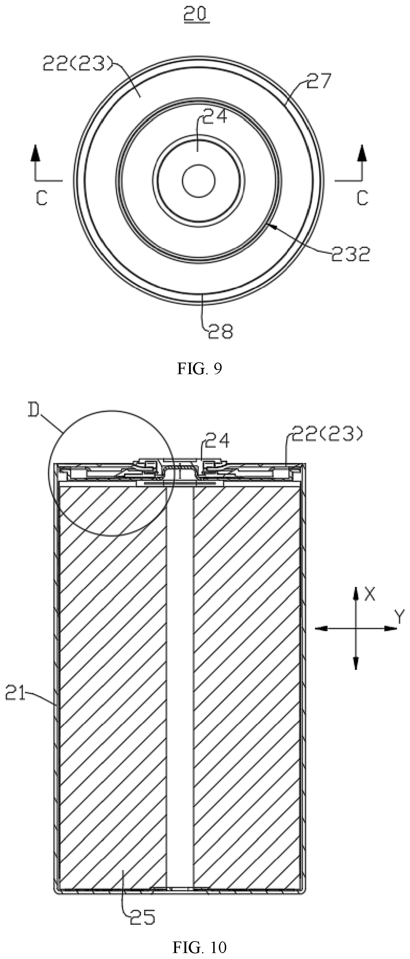

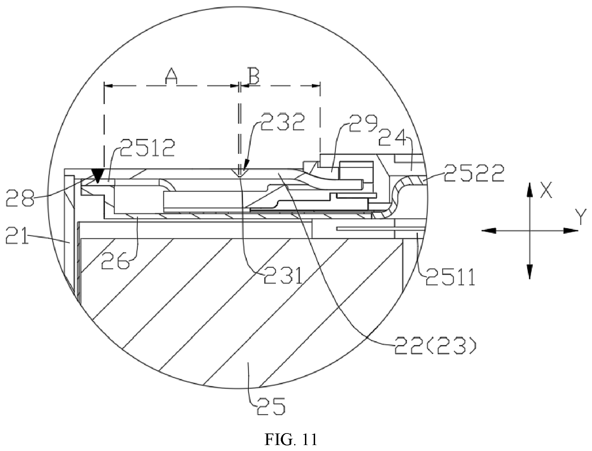

Referring to FIGs. 8, 9, 10, and 11, FIG. 8 is a schematic structural diagram of a battery cell 20 according to some other embodiments of the present application. FIG. 9 is a schematic top view of a battery cell 20 according to some other embodiments of the present application. FIG. 10 is a cross-sectional view of position C-C in FIG. 9. FIG. 11 is an enlarged view of position D in FIG. 10. In some other embodiments, the weak part 231 is of an annular structure disposed around the electrode terminal 24. In the direction perpendicular to the thickness direction of the wall part 23, the minimum distance between the weak part 231 and the weld mark part 28 is greater than the minimum distance between the weak part 231 and the electrode terminal 24.

Referring to FIG. 11, the minimum distance between the weak part 231 and the weld mark part 28 in the direction perpendicular to the thickness direction of the wall part 23 is A, and the minimum distance between the weak part 231 and the electrode terminal 24 in the direction perpendicular to the thickness direction of the wall part 23 is B, satisfying: A > B. In short, in the direction perpendicular to the thickness direction of the wall part 23, the weak part 231 is disposed between the weld mark part 28 and the electrode terminal 24, and the weak part 231 is disposed proximal to the electrode terminal 24.

The weak part 231 is of an annular structure disposed around the electrode terminal 24, and the weak part 231 divides the pressure relief mechanism into two parts, with one part located on the outer side of the weak part 231 and the other part located on the inner side of the weak part 231. In the direction perpendicular to the thickness direction of the wall part 23, by setting the minimum distance between the weak part 231 and the weld mark part 28 to be greater than the minimum distance between the weak part 231 and the electrode terminal 24, that is, by disposing the weak part 231 to be proximal to the electrode terminal 24, when the battery cell 20 is subjected to pressure relief, a part of the pressure relief mechanism located on the outer side of the weak part 231 is subjected to a large acting force exerted by the gas, and the part of the pressure relief mechanism located on the outer side of the weak part 231 can be opened for pressure relief, such that the electrode terminal 24 is not easily separated from the wall part 23 and is less likely to come into contact with other electrical connection components to cause a short circuit.

Referring to FIGs. 3, 4, 5, 6, and 7, in some embodiments, in the direction perpendicular to the thickness direction of the wall part 23, the minimum distance between the weak part 231 and the weld mark part 28 is A, satisfying: A ≥ 3 mm.

The minimum distance A between the weak part 231 and the weld mark part 28 in the direction perpendicular to the thickness direction of the wall part 23 may be 3 mm, 3.1 mm, 3.2 mm, 3.3 mm, 3.4 mm, 3.5 mm, 3.6 mm, 3.7 mm, 3.8 mm, 3.9 mm, 4 mm, 4.1 mm, 4.2 mm, 4.3 mm, 4.4 mm, 4.5 mm, or the like.

By setting the minimum distance between the weak part 231 and the weld mark part 28 in the direction perpendicular to the thickness direction of the wall part 23 to be greater than or equal to 3 mm, the impact of high heat on the weak part 231 during welding of the first electrode lead-out part 251 and the wall part 23 can be reduced, thereby reducing the risk of premature cracking of the weak part 231 and improving the service life of the battery cell 20.

Referring to FIGs. 3, 4, 5, 6, and 7, in some embodiments, in the direction perpendicular to the thickness direction of the wall part 23, the minimum distance between the weak part 231 and the electrode terminal 24 is B, satisfying: B ≥ 4 mm.

The minimum distance B between the weak part 231 and the electrode terminal 24 in the direction perpendicular to the thickness direction of the wall part 23 may be 4 mm, 4.1 mm, 4.2 mm, 4.3 mm, 4.4 mm, 4.5 mm, 4.6 mm, 4.7 mm, 4.8 mm, 4.9 mm, 5 mm, or the like.

By setting the minimum distance between the weak part 231 and the electrode terminal 24 in the direction perpendicular to the thickness direction of the wall part 23 to be greater than or equal to 4 mm, the distance between the weak part 231 and the electrode unit is large, which can reduce the inhibiting effect of the electrode terminal 24 on the deformation of the weak part 231, thereby facilitating the timely cracking of the weak part 231 when the battery cell 20 is subjected to pressure relief, and improving the timeliness of pressure relief of the battery cell 20.

Referring to FIGs. 3, 4, 5, 6, and 7, in some embodiments, the weld mark part 28 and the weak part 231 are each of an annular structure disposed around the electrode terminal 24.

The weld mark part 28 is of an annular structure, and the weld mark part 28 is in a closed shape extending along a closed trajectory. For example, the weld mark part 28 may be in a closed shape such as a circle, an ellipse, a square, or a hexagon. The electrode terminal 24 is disposed on an inner side of the weld mark part 28.

The weld mark part 28 is of an annular structure, and the weld mark part 28 is disposed around an outer side of the electrode terminal 24. In this way, the first electrode lead-out part 251 can be relatively stably connected to the wall part 23 and have a large current passage area. By configuring the weak part 231 as an annular structure, when the battery cell 20 is subjected to pressure relief, the pressure relief mechanism can crack along the weak part 231, thereby forming a large opening and facilitating rapid pressure relief of the battery cell 20.

Referring to FIGs. 3, 4, 5, 6, and 7, in some embodiments, the pressure relief mechanism is provided with a pressure relief groove 232, and the weak part 231 is formed in a region of the pressure relief mechanism where the pressure relief groove 232 is provided.

The pressure relief mechanism is provided with a first surface and a second surface opposite to each other in the thickness direction of the wall part 23. The first surface is provided with the pressure relief groove 232; that is, the pressure relief groove 232 is recessed from the first surface toward the second surface.

In the thickness direction of the wall part 23, the weak part 231 is a part, located between a groove bottom surface (which is most distal to the first surface) of the pressure relief groove 232 and the second surface, of the pressure relief mechanism.

The pressure relief groove 232 may be processed and formed in various ways, such as stamping, cold heading, or the like. Taking the formation of the pressure relief groove 232 by stamping as an example, the pressure relief groove 232 may be formed on the pressure relief mechanism by stamping in a direction from the first surface to the second surface.

Forming the pressure relief groove 232 by stamping or cold heading causes a groove wall of the pressure relief groove 232 to undergo cold work hardening (where the grain arrangement changes, leading to lattice distortion and deformation, reducing metal plasticity, and increasing material hardness). This enhances the ability of the pressure relief groove to resist an external impact, and the pressure relief groove is not easily damaged by the external impact. In this way, it is conducive to reducing the risk of liquid leakage of the pressure relief mechanism.

Forming the weak part 231 by forming the pressure relief groove 232 on the pressure relief mechanism is simple and convenient, and the cost is low.

Referring to FIGs. 3, 4, 5, 6, and 7, in some embodiments, the pressure relief groove 232 is disposed on a surface of the pressure relief mechanism facing away from an interior of the shell 21.

The first surface is the surface of the pressure relief mechanism facing away from the interior of the shell 21, and the second surface is a surface of the pressure relief mechanism facing the interior of the shell 21.

The first surface is the surface of the pressure relief mechanism facing away from the interior of the shell 21, that is, an outer surface of the pressure relief mechanism. The second surface is the surface of the pressure relief mechanism facing the interior of the shell 21, that is, an inner surface of the pressure relief mechanism. In short, the pressure relief groove 232 is disposed on the outer surface of the pressure relief mechanism.

By disposing the pressure relief groove 232 on the surface of the pressure relief mechanism facing away from the interior of the shell body 211, the weak part 231 can crack under a low tension, which facilitates the cracking.

Referring to FIGs. 3, 4, 5, 6, and 7, in some embodiments, the first electrode lead-out part 251 includes a first tab 2511 and a first current collecting member 2512. The first current collecting member 2512 is electrically connected to the first tab 2511 and the wall part 23, and the first current collecting member 2512 is connected to the wall part 23 by welding to form the weld mark part 28.

When the first electrode lead-out part 251 includes the first current collecting member 2512, the first current collecting member 2512 is electrically connected to the first tab 2511 and the wall part 23, and the weld mark part 28 is a weld mark part 28 left after the first current collecting member 2512 is welded to the wall part 23.

By providing the first current collecting member 2512, the electrical connection between the first tab 2511 and the wall part 23 is facilitated, and the difficulty in connecting the electrode assembly 25 to the wall part 23 is reduced.

Referring to FIGs. 3, 4, 5, 6, and 7, in some embodiments, the first current collecting member 2512 and the wall part 23 are arranged in the thickness direction of the wall part 23. The wall part 23 is welded to the first current collecting member 2512 in a penetrating manner, and a part of the weld mark part 28 protrudes from a surface of the wall part 23 facing away from the interior of the shell 21.

During the welding in a penetrating manner, the wall part 23 may be welded to the first current collecting member 2512 in a direction from the wall part 23 to the first current collecting member 2512, such that the weld mark part 28 can be directly observed on an outer surface of the wall part 23.

Connecting the first current collecting member 2512 to the wall part 23 by welding in a penetrating manner is simple and convenient, and the welding quality is high. In addition, during the welding in a penetrating manner, the welding direction is substantially perpendicular to the thickness direction of the wall part 23, which can reduce the impact on the weak part 231, reduce the risk of premature cracking of the weak part 231, and is conducive to improving the service life of the battery cell 20.

Referring to FIGs. 3, 4, 5, 6, and 7, in some embodiments, the pressure relief mechanism and the wall part 23 are integrally formed.

Being integrally formed means that the wall part 23 and the pressure relief mechanism are of an integrated structure when provided. For example, the pressure relief mechanism may be formed on the wall part 23 by stamping, cold heading, or the like.

By integrally forming the pressure relief mechanism with the wall part 23, no additional welding or bonding process is required, which is conducive to reducing the risk of liquid leakage of the pressure relief mechanism. In addition, during production, it is easy to achieve relatively consistent burst pressures among a plurality of processed battery cells 20.

In some other embodiments, the pressure relief mechanism is disposed separately from the wall part 23, the wall part 23 is provided with a pressure relief hole, and the pressure relief mechanism is mounted on the wall part 23 and covers the pressure relief hole.

The description that "the pressure relief mechanism is disposed separately from the wall part 23, the wall part 23 is provided with a pressure relief hole, and the pressure relief mechanism is mounted on the wall part 23 and covers the pressure relief hole" means that during manufacturing, the wall part 23 is provided with the pressure relief hole, and the pressure relief mechanism and the wall part 23 are separately provided and finally connected together. For example, the pressure relief mechanism may be welded to the wall part 23. The pressure relief mechanism may be an anti-explosion sheet mounted on the wall part 23.

By configuring the pressure relief mechanism to be disposed separately from the wall part 23 and mounted on the wall part 23, the processing and manufacturing are facilitated.

Referring to FIGs. 3, 4, 5, 6, and 7, in some embodiments, the first electrode lead-out part 251 includes a first tab 2511, and the second electrode lead-out part 252 includes a second tab 2521. In the thickness direction of the wall part 23, the first tab 2511 and the second tab 2521 are formed at a same end of the electrode assembly 25.

Referring to FIG. 4, in the embodiment shown in FIG. 4, the first tab 2511 and the second tab 2521 are both formed at an upper end of the electrode assembly 25.

By forming the first tab 2511 and the second tab 2521 at the same end of the electrode assembly 25, the electrical connection between the first tab 2511 and the wall part 23 and the electrical connection between the second tab 2521 and the electrode terminal 24 become simple and convenient, which is conducive to reducing the production and manufacturing costs.

Referring to FIGs. 3, 4, 5, 6, and 7, in some embodiments, the shell 21 includes a shell body 211 and an end cover 212. The shell body 211 is provided with an accommodating space with an opening at one end, the accommodating space is configured to accommodate the electrode assembly 25, and the end cover 212 is connected to the shell body 211 and closes the opening. The end cover 212 is the wall part 23.

When the end cover 212 is the wall part 23, the first electrode lead-out part 251 is connected to the end cover 212, and the electrode terminal 24 is disposed on the end cover 212, such that the manufacturing is simple and convenient.

Referring to FIGs. 3, 4, 5, 6, and 7, in some embodiments, the battery cell 20 is a cylindrical battery cell.

The embodiments of the present application further provide a battery 100. The battery 100 includes the above battery cell 20.

The embodiments of the present application further provide an electric device. The electric device includes the above battery cell 20, and the battery cell 20 is configured to provide electric energy for the electric device.

According to some embodiments of the present application, reference is made to FIGs. 3 to 11.

The embodiments of the present application provide a battery cell 20. The battery cell 20 includes a shell 21, an electrode assembly 25, and an electrode terminal 24. The shell 21 is provided with a wall part 23, and the electrode assembly 25 is accommodated in the shell 21. The electrode assembly 25 includes a first electrode lead-out part 251 and a second electrode lead-out part 252, and a polarity of the first electrode lead-out part 251 is opposite to a polarity of the second electrode lead-out part 252. The first electrode lead-out part 251 is electrically connected to the wall part 23, the electrode terminal 24 is mounted on the wall part 23 in an insulated manner, and the electrode terminal 24 is electrically connected to the second electrode lead-out part 252. The first electrode lead-out part 251 is electrically connected to the wall part 23, and the second electrode lead-out part 252 is electrically connected to the electrode terminal 24, such that electric energy of the electrode assembly 25 can be output or electric energy can be input to the electrode assembly 25 through the wall part 23 and the electrode terminal 24. In one aspect, the number of electrode terminals 24 provided can be reduced, thereby reducing the cost, reducing the occupation of the internal space of the battery 100, and improving the energy density. In another aspect, an information acquisition device, after being electrically connected to the wall part 23, can acquire use information of the battery cell 20, thereby facilitating the connection of the information acquisition device to the battery cell 20 and data acquisition, helping to reduce the difficulty of data acquisition of the battery cell 20, and further reducing the production and manufacturing costs.

The first electrode lead-out part 251 is connected to the wall part 23 by welding to form a weld mark part 28. The battery cell 20 includes a pressure relief mechanism, and the pressure relief mechanism is disposed on the wall part 23. The pressure relief mechanism includes a weak part 231, and the pressure relief mechanism is configured to be capable of cracking along at least a part of the weak part 231 when the battery cell 20 is subjected to pressure relief. In a direction perpendicular to a thickness direction of the wall part 23, the weak part 231 is disposed between the weld mark part 28 and the electrode terminal 24. By providing the pressure relief mechanism, the pressure relief mechanism can crack along at least a part of the weak part 231 when the battery cell 20 is subjected to pressure relief, so as to release the internal pressure of the battery cell 20. In the direction perpendicular to the thickness direction of the wall part 23, the weak part 231 is disposed between the weld mark part 28 and the electrode terminal 24, such that a large opening can be opened when the weak part 231 cracks, which is conducive to rapid pressure relief of the battery cell 20.

In some embodiments, the weak part 231 is of an annular structure disposed around the electrode terminal 24. In the direction perpendicular to the thickness direction of the wall part 23, a minimum distance between the weak part 231 and the weld mark part 28 is less than a minimum distance between the weak part 231 and the electrode terminal 24. In the direction perpendicular to the thickness direction of the wall part 23, by setting the minimum distance between the weak part 231 and the weld mark part 28 to be less than the minimum distance between the weak part 231 and the electrode terminal 24, that is, by disposing the weak part 231 to be proximal to the weld mark part 28, when the battery cell 20 is subjected to pressure relief, a region on an inner side of the weak part 231 is subjected to a large acting force exerted by the gas, and the region on the inner side of the weak part 231 can be opened to form a large opening for gas discharging. When the battery cell 20 is subjected to pressure relief, the pressure relief area is large, which is conducive to rapid pressure relief of the battery cell 20.

In some other embodiments, the weak part 231 is of an annular structure disposed around the electrode terminal 24. In the direction perpendicular to the thickness direction of the wall part 23, the minimum distance between the weak part 231 and the weld mark part 28 is greater than the minimum distance between the weak part 231 and the electrode terminal 24. In the direction perpendicular to the thickness direction of the wall part 23, by setting the minimum distance between the weak part 231 and the weld mark part 28 to be greater than the minimum distance between the weak part 231 and the electrode terminal 24, that is, by disposing the weak part 231 to be proximal to the electrode terminal 24, when the battery cell 20 is subjected to pressure relief, a region on an outer side of the weak part 231 is subjected to a large acting force exerted by the gas, and the region on the outer side of the weak part 231 can be opened, such that the electrode terminal 24 is not easily separated from the wall part 23 and is less likely to come into contact with other electrical connection components to cause a short circuit.

The above are only preferred embodiments of the present application and are not intended to limit the present application. For those skilled in the art, the present application can be modified and varied. Any modification, equivalent substitution, improvement, and the like made within the spirit and principle of the present application shall all fall within the protection scope of the present application.

## Claims

1. A battery cell, comprising:
a shell, provided with a wall part;
an electrode assembly, accommodated in the shell, wherein the electrode assembly comprises a first electrode lead-out part and a second electrode lead-out part, a polarity of the first electrode lead-out part is opposite to a polarity of the second electrode lead-out part, and the first electrode lead-out part is connected to the wall part by welding to form a weld mark part;
an electrode terminal, mounted on the wall part in an insulated manner, wherein the electrode terminal is electrically connected to the second electrode lead-out part; and
a pressure relief mechanism, disposed on the wall part, wherein the pressure relief mechanism comprises a weak part, and the weak part is configured to be capable of at least partially cracking when the battery cell is subjected to pressure relief;
in a direction perpendicular to a thickness direction of the wall part, the weak part is disposed between the weld mark part and the electrode terminal.

2. The battery cell according to claim 1, wherein the weak part is of an annular structure disposed around the electrode terminal, and in the direction perpendicular to the thickness direction of the wall part, a minimum distance between the weak part and the weld mark part is less than a minimum distance between the weak part and the electrode terminal.

3. The battery cell according to claim 1, wherein the weak part is of an annular structure disposed around the electrode terminal, and in the direction perpendicular to the thickness direction of the wall part, a minimum distance between the weak part and the weld mark part is greater than a minimum distance between the weak part and the electrode terminal.

4. The battery cell according to any one of claims 1 to 3, wherein in the direction perpendicular to the thickness direction of the wall part, a minimum distance between the weak part and the weld mark part is A, satisfying: A ≥ 3 mm.

5. The battery cell according to any one of claims 1 to 4, wherein in the direction perpendicular to the thickness direction of the wall part, a minimum distance between the weak part and the electrode terminal is B, satisfying: B ≥ 4 mm.

6. The battery cell according to any one of claims 1 to 5, wherein the weld mark part and the weak part are each of an annular structure disposed around the electrode terminal.

7. The battery cell according to any one of claims 1 to 6, wherein the pressure relief mechanism is provided with a pressure relief groove, and the weak part is formed in a region of the pressure relief mechanism where the pressure relief groove is provided.

8. The battery cell according to claim 7, wherein the pressure relief groove is disposed on a surface of the pressure relief mechanism facing away from an interior of the shell.

9. The battery cell according to any one of claims 1 to 8, wherein the first electrode lead-out part comprises a first tab and a first current collecting member, the first current collecting member is electrically connected to the first tab and the wall part, and the first current collecting member is connected to the wall part by welding to form the weld mark part.

10. The battery cell according to claim 9, wherein the first current collecting member and the wall part are arranged in the thickness direction of the wall part, the wall part is welded to the first current collecting member in a penetrating manner, and a part of the weld mark part protrudes from a surface of the wall part facing away from an interior of the shell.

11. The battery cell according to any one of claims 1 to 10, wherein the pressure relief mechanism and the wall part are integrally formed.

12. The battery cell according to any one of claims 1 to 10, wherein the pressure relief mechanism is disposed separately from the wall part, the wall part is provided with a pressure relief hole, and the pressure relief mechanism is mounted on the wall part and covers the pressure relief hole.

13. The battery cell according to any one of claims 1 to 12, wherein the first electrode lead-out part comprises a first tab, the second electrode lead-out part comprises a second tab, and in the thickness direction of the wall part, the first tab and the second tab are formed at a same end of the electrode assembly.

14. The battery cell according to any one of claims 1 to 13, wherein the shell comprises:
a shell body, provided with an accommodating space with an opening at one end, wherein the accommodating space is configured to accommodate the electrode assembly; and
an end cover, connected to the shell body and closing the opening, wherein
the end cover is the wall part.

15. The battery cell according to any one of claims 1 to 14, wherein the battery cell is a cylindrical battery cell.

16. A battery, comprising the battery cell according to any one of claims 1 to 15.

17. An electric device, comprising the battery cell according to any one of claims 1 to 15, wherein the battery cell is configured to provide electric energy for the electric device.
